# EUROPEAN PATENT APPLICATION

(11) **EP 2 264 635 A1**
(43) Date of publication of application: **22.12.2010**
(21) Application number: 09305575.4
(22) Date of filing: 19.06.2009
(51) Int. Cl.: G06F 21/00

(54) **Software resistant against reverse engineering**

(71) Applicant: Thomson Licensing, 92130 Issy-les-Moulineaux (FR)
(72) Inventor: Eluard, Marc, 92648, Boulogne Cedex (FR); Lelievre, Sylvain, 92648, Boulogne Cedex (FR); Morvan, Michel, 92648, Boulogne Cedex (FR); Prigent, Nicolas, 92648, Boulogne Cedex (FR)
(74) Representative: Berthier, Karine

(57) **Abstract**

A sofftware application is protected against reverse engineering by executing it on two separate processors, a main processor (100) and a secure processor (200). The main processor (100) calls the secure processor (200) to have specific blocks of code executed; preferably, a unique command is used for each call, thereby making it more difficult to reverse engineer the application. The command parameters are preferably more than needed, letting the secure processor (200) pick out the ones that are necessary; the same may be done for the response.

## Description

### TECHNICAL FIELD

The present invention relates generally to software applications, and in particular to applications resistant against reverse engineering.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

When a software application manipulates critical data or performs sensitive operations, it is often desirable to limit exposure to reverse engineering, which provides information about the execution flow of the software application. Such knowledge is a main target of hackers, who currently use tools such like Debuggers and Disassemblers to understand data and control flows.

An application that runs on a processing unit is exposed to any vulnerability that the platform may have. On an open platform, such as PC, MAC, applications are widely exposed since they are prone to logical attacks - use of debuggers for hacking purposes - as well as physical attacks - e.g. bus probing and memory analysis. On closed platforms, the exposure depends on the design; logical or physical access may render hacking more difficult. A secure closed platform, a so-called processor, is protected against a range of known attacks, thereby providing an acceptable security level for the hosted application.

To increase the protection of an application intended to be executed on an insecure main processor, one solution splits the execution of the application between the main processor and a secure processor. The secure processor, typically a smart card, advantageously securely stores and executes applications that manipulate critical data such as keys or perform critical computations. Both parts of the application communicate through a predefined command/response channel. This communication channel allows the main processor to send commands with data to the secure processor. The secure processor application processes the command and returns the obtained result. The sequential suite of commands exchanged between both devices typically conforms to a predefined protocol, which may leak sensitive information that may be useful to an attacker.

First, analysis of this protocol helps to understand the behaviour of the main application and its control workflow. This is not critical since the main application does not perform any sensitive operations, but the analysis helps reverse engineering by identifying temporal and spatial locations of critical operations on the main processor and the secure processor.

Second, by looking carefully at the protocol between the main processor and the secure processor, an attacker may understand and distinguish the functions performed by the secure processor. As a consequence, an attacker could simulate the behaviour of the secure processor and return expected values in the order that the main application expects.

It can therefore be appreciated that there is a need for a solution that increases the protection of a software application against reverse engineering. This invention provides such a solution.

### SUMMARY OF INVENTION

In a first aspect, the invention is directed to a system for protected execution of an application. The system comprises a main processor adapted to execute a first part of the application and a secure processor adapted to execute a second and a third part of the application. The main processor is further adapted to send a call to the secure processor to have the second part or the third part of the application executed and to receive a response to the call and the secure processor is further adapted to receive the call, execute the second or the third part of the application, and return the response. The secure processor also comprises a state indicator that the secure processor consults at the reception of the call to select which part of the application to execute.

In a first preferred embodiment, the secure processor further consults the state indicator to decide which parameters of the call it should use for the execution of the selected part of the application.

In a second preferred embodiment, the state indicator comprises a pre-calculated execution flow.

In a third preferred embodiment, the call is a predetermined command having one or more parameters.

In a second aspect, the invention is directed to a secure processor adapted for protected execution of an application. The secure processor is adapted to execute a first and a second part of the application and it comprises means for receiving from a main processor a call instructing the secure processor to execute the first part or the second part of the application, means for executing the first and the second part of the application to obtain a result, means to generate a response from the result, and means for returning the response. The secure processor further comprises a state indicator that it consults at the reception of the call to select which of the first and the second part of the application to execute.

In a first preferred embodiment, the secure processor further consults the state indicator to decide which parameters of the call it should use for the execution of the selected part of the application.

In a second preferred embodiment, the state indicator comprises a pre-calculated execution flow.

In a third aspect, the invention is directed to a method of protected execution of an application. A secure processor, which is adapted for execution of a first and a second part of the application, receives from a main processor a call instructing the secure processor to execute the first part or the second part of the application, consults a state indicator to select which of the first and the second part of the application to execute, executes the selected part of the application to obtain a response, and returns the response.

### BRIEF DESCRIPTION OF DRAWINGS

Preferred features of the present invention will now be described, by way of non-limiting example, with reference to the accompanying drawings, in which
Figure 1 illustrates a main processor comprising an application logically divided into a number of basic blocks;
Figure 2 illustrates an example of functionality delegation according to a preferred embodiment of the invention; and
Figure 3 illustrates execution of an application according to a preferred embodiment of the invention.

### DESCRIPTION OF EMBODIMENTS

The present invention is directed to protection of software application against control workflow reverse engineering by delegating a plurality of parts of the software code (critical of not) to a secure processor, such as that of a smartcard. A main inventive idea is to make it more difficult to identify the functional part of the code computed by this secure processor, by having the main processor call the secure processor using a unique command. Use of this unique command can also make it more difficult to understand the application execution flow on the main processor for someone analysing the command/response channel.

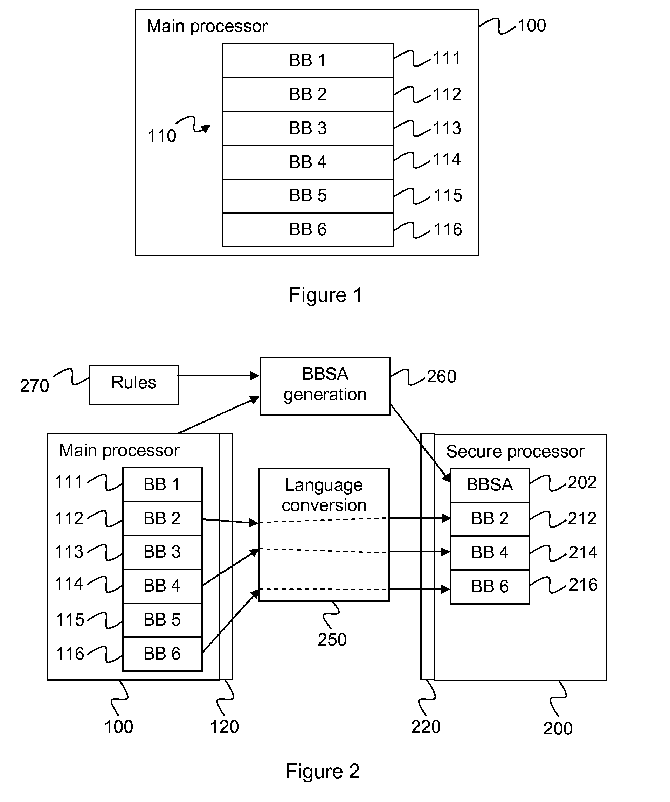

Any software application may be logically divided into one or more interacting basic blocks. In the present description, a basic block (BB) is a set of one or more instructions that have one entry point, one exit point and no jump instructions that would lead out of this block in-between. The interaction between the basic blocks describes the execution control flow of the program. Figure 1 illustrates a main processor 100 comprising an application 110 having a number of basic blocks, BB 1 - BB 6, 121-126.

According to a preferred embodiment of the invention, at least two of the basic blocks 121-126 are delegated to a secure processor. The delegation comprises:
- Identification of the basic blocks to be transferred to the main processor.
- The identified basic blocks are then stored in the secure processor and the corresponding basic blocks in the main application are replaced by a call to the secure processor. The collection of basic blocks to remove may be done either manually or automatically. In an automated mode, it is expected that segmentation rules are correctly defined to strengthen the protection of the main application. For instance, the amount of selected basic blocks has an impact on the level of obfuscation of the workflow of main application. Moreover, as it is possible that the secure processor does not use the same execution language, it is supposed that a language conversion can be performed, although this is not mandatory.

On the main processor: all the removed basic blocks are replaced by a single command call interface. This single command call and its associated passed parameters do not identify the basic block that will be executed in the secure processor. In the same, the call order of these blocks is computed and transformed as a Basic Block State Automation (BBSA). The BBSA is stored in the secure processor.

An illustrative example of this delegation of functionality of application code is depicted in Figure 2. In the example, it has been decided to delegate three basic blocks BB 2, BB 4, and BB 6. The basic blocks go through language conversion 250 and are stored in a secure processor 200 as three basic blocks 212, 214, 216. The BBSA 202 is generated 260 with the aid of execution rules 270, and stored in the secure processor 200.

The main processor 100 and the secure processor 200 each comprise a communication unit 120 and 220, respectively, that may be implemented as a plurality of interfaces, e.g. one for reception and one for transmission.

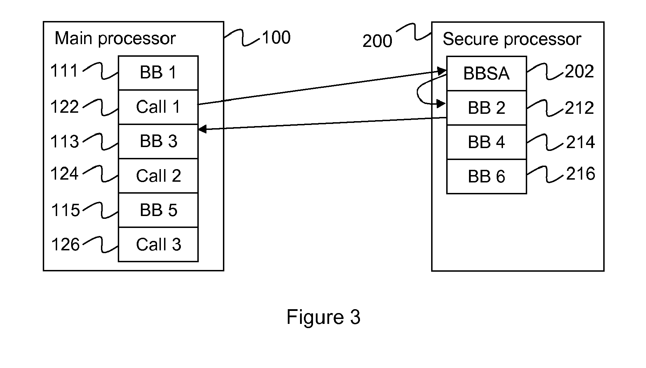

Figure 3 illustrates execution of an application according to a preferred embodiment of the invention. Assuming that the execution on the main processor 100 follows the order from top to bottom in the Figure, BB 1 is first executed. Next the execution continues with a basic block 122 (substituting basic block 2) that comprises a call, Call 1, to the secure processor 200. The call is in the form of a unique command, with parameters that will be further described hereinbelow. In the present application, 'unique' means that the command always is the same, but it will be noted that its parameters may change.

Each time the secure processor 200 receives a call from the main processor, it consults the BBSA 202 to determine which basic block to use. The functional unit is executed and response to the command is sent to the main application executed by the main processor 100. In the present example, BB 2 is executed in response to Call 1 and the result is returned to the main processor 100 that then continues the execution with BB 3. Although not illustrated, the execution then continues with Call 2 - BBSA - BB 4 - BB 5 - Call 3 - BBSA - BB 6.

As will be appreciated, parts of the original application on the main processor 100 are now processed by the secure processor 200 in a predefined order through the unique command.

The command sent by the main processor 100 includes parameters to be processed by the secure processor 200. It is preferred that these parameters are obfuscated in order to make identification of BBSA state more difficult, since a naïve method that comprises sending only the useful parameters, from which an attacker can extrapolate the targeted functionality through analysis of the values.

To diminish this risk, it is preferred to transmit a fixed number of parameters or a fixed length parameter block. The number or length is the same for every call and its value must be set accordingly to accommodate the needs of all the basic blocks in the secure processor 200. Thus, when receiving a command, the secure processor 200 chooses the parameters it needs to execute the current basic block.

It will be appreciated that the parameters may be transmitted using a random order computed during the software protection phase. This static random order can be changed to a dynamic random order by using an extra parameter, which can prevent an attacker from guessing which parameters are unused. If more than one basic block have the same functionality (or if a basic block is used more than once), then the corresponding parameter order for the call will not be the same.

After having executed a given basic block, the secure processor 200 may return a response to the main processor 100. As for the parameters, a naïve method would consist in just sending the exact results of a basic block. It is therefore preferred to send a fixed number of response parameters (or a fixed length response block). The order in which the response data are transmitted may be changed randomly (as for the call parameters). It will be appreciated that this can prevent an attacker from guessing the parameters that are not used.

Summing up, upon reception of a command from the main processor 100, the secure processor 200:
- consults the BBSA to determine the next (i.e. the current) basic block to execute;
- extracts from the command the necessary parameters;
- executes the selected basic block with the extracted parameters;
- updates the FUSA to reflect the current state; and
- prepares the response and sends it to the main processor.

In a variant embodiment, the command is not a unique command. Instead the command may vary, for example by using randomized commands or different predetermined commands. However, the secure processor 200 will ignore the form of the command and refer to the BBSA in order to determine the basic block to execute. In other words, regardless of the form of the command, the secure processor 200 will just see that it has received a command. It will be appreciated that this can make reverse engineering even more difficult, as an attacker first has to realise that the form of the command is bogus.

In a preferred embodiment, the main processor 100 is the CPU of any suitable commercial electronics device, such as a personal computer, a mobile phone, a set-top box or a video game console.

The secure processor 200 is advantageously the processor of a smart card, embedded in a card form factor object or a USB key form factor. The communication between the main processor 100 and the secure processor 200 may pass through an interface with or without contact.

The present invention can increase the obfuscation of application code and increase the time and the cost required to reverse-engineer the protected application and thus increase the level needed for an attacker.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A system for protected execution of an application (110), the system comprising:
- a main processor (100) adapted to execute a first part of the application (110); and
- a secure processor (200) adapted to execute a second and a third part of the application (110);
wherein the main processor (100) is further adapted to send a call to the secure processor (200) to have the second part or the third part of the application (110) executed and to receive a response to the call;
wherein the secure processor (200) is further adapted to receive the call, to execute the second or the third part of the application, and to return the response.
the system being **characterised in that** the secure processor (200) comprises a state indicator (202) that the secure processor (200) consults at the reception of the call to select which of the second part and the third part of the application to execute.

2. The system of claim 1, wherein the secure processor (200) further consults the state indicator (202) to decide which parameters of the call it should use for the execution of the selected part of the application.

3. The system of claim 1, wherein the state indicator (202) comprises a pre-calculated execution flow.

4. The system of claim 1, wherein the call is a predetermined command having one or more parameters.

5. A secure processor (200) adapted for protected execution of an application (110), the secure processor (200) being adapted to execute a first and a second part of the application (110) and comprising:
means for receiving (120) a call from a main processor (100), the call instructing the secure processor (200) to execute the first part or the second part of the application (110);
means for executing the first and the second part of the application to obtain a result;
means for generating a response from the result; and
means for returning (120) the response;
the secure processor (200) being **characterised in that** it comprises a state indicator (202) that it consults at the reception of the call to select which of the first and the second part of the application to execute.

6. The secure processor of claim 5, wherein the secure processor (200) further consults the state indicator (202) to decide which parameters of the call it should use for the execution of the selected part of the application.

7. The secure processor of claim 5, wherein the state indicator (202) comprises a pre-calculated execution flow.

8. A method of protected execution of an application (110), the method comprising the steps, at a secure processor (200) adapted for execution of a first and a second part of the application (110), of:
receiving a call from a main processor (100), the call instructing the secure processor (200) to execute the first part or the second part of the application (110);
consulting a state indicator (202) to select which of the first and the second part of the application to execute;
executing the selected part of the application to obtain a response; and
returning the response.
